# EUROPÄISCHE PATENTSCHRIFT

(11) **EP 1 666 133 B1**
(45) Veröffentlichungstag und Bekanntmachung des Hinweises auf die Patenterteilung: **12.12.2007**
(21) Anmeldenummer: 05450190.3
(22) Anmeldetag: 24.11.2005
(51) Int. Cl.: B01F 7/24, B01F 13/00, B01F 15/00, A01K 5/00

(54) **Fahrzeug mit einem darauf montierten Mischapparat**
Vehicle mounted mixing apparatus
Dispositif de mélange monté sur camion

(30) Priorität: 25.11.2004 AT 19782004
(43) Veröffentlichungstag der Anmeldung: 07.06.2006
(73) Patentinhaber: Tropper Maschinen und Anlagen GmbH, 4690 Schwanenstadt (AT)
(72) Erfinder: Baldinger, Josef, 4690 Schwanenstadt (AT)
(74) Vertreter: Hübscher, Helmut

(56) Entgegenhaltungen:
- DE-B- 1 198 116
- DE-U1- 20 115 929
- DE-U1- 20 313 741
- US-A- 3 910 508

## Beschreibung

Die Erfindung bezieht sich auf ein Fahrzeug mit einem Mischbehälter, der zum Ansaugen von zu mischendem, rieselfähigem Mischgut über eine Zubringereinrichtung mit Hilfe einer an den Mischbehälter angeschlossenen Saugleitung mit Unterdruck beaufschlagbar ist, und mit einer innerhalb des Mischbehälters vorgesehenen Mischeinrichtung, die eine von einem Austragstrichter des Mischbehälters ausgehende, durch ein stehendes Fördergehäuse geführte Mischerschnecke umfaßt, die im Bereich ihres Abwurfendes Wurfflügel trägt.

Insbesondere zur Futteraufbereitung ist es bekannt (DE 203 13 741 U1), auf einem Fahrzeug einen stehenden Mischbehälter in Form eines Rotationskörpers mit einer koaxialen Mischeinrichtung vorzusehen, die aus einer von einem Austragstrichter des Mischbehälters ausgehenden, ein Fördergehäuse durchsetzenden und im Deckenbereich des Mischbehälters endenden Mischerschnecke besteht. Mit Hilfe dieser Mischerschnecke wird das rieselfähige Mischgut aus dem Austragstrichter nach oben gefördert und auf den Mischgutstock abgeworfen, so daß das Gut aufgrund der dadurch bedingten Kreislaufführung gemischt wird. Der Abwurf des durch die Mischerschnecke nach oben geförderten Mischgutes kann durch im Bereich des Abwurfendes der Mischerschnecke vorgesehene Wurfflügel verbessert werden (AT 401 736 B). Die Befüllung der Mischbehälter erfolgt vorzugsweise über ein Gebläse, das saugseitig an den als Druckbehälter ausgebildeten Mischbehälter angeschlossen ist, so daß das Mischgut beispielsweise über eine Quetsch- und Mahleinrichtung in den Mischbehälter angesaugt und mit ebenfalls angesaugten Zusatzstoffen vermischt wird, bevor das gemischte Gut ausgetragen wird. Für den Gutaustrag ist die Druckseite des Gebläses mit einer an den Austragstrichter des Mischbehälters angeschlossenen, gegenüber dem Austragstrichter absperrbaren Austragskammer verbunden, von der wenigstens eine pneumatische Förderleitung ausgeht. Nachteilig bei diesen bekannten, auf Fahrzeugen angeordneten Mischbehältern ist vor allem, daß das Aufnahmevolumen des kreiszylindrischen Mischbehälters zufolge der vorgegebenen maximalen Fahrzeugbreite und -höhe beschränkt ist. Um die Mischgutmenge zu vergrößern wurde bereits vorgeschlagen (DE 199 53 163 A1), zwei Mischbehälter mit je einer koaxial zum Behälter angeordneten Mischerschnecke in Fahrzeuglängsrichtung hintereinander vorzusehen. Durch diese Maßnahme kann zwar die Mischgutmenge verdoppelt werden, doch ergibt sich ein vergleichsweise großer Konstruktionsaufwand. Außerdem werden die beiden Mischbehälter voneinander getrennt gefüllt und gemischt, so daß es schwierig ist, ein einheitliches Mischergebnis sicherzustellen.

Dieser Nachteil wird bei einer anderen bekannten Konstruktion vermieden (DE 1 198 116 B), bei der zwei stehende kreiszylindrische Behälter zu einem gemeinsamen Behälter gefügt werden, indem die Mantelabschnitte im Überlappungsbereich der beiden Behälter weggelassen werden. Da in der Zylinderachse jeweils eine Mischerschnecke vorgesehen ist, kann ein einheitliches Mischgut erreicht werden, weil die Mischerschnecken das Mischgut jeweils auch in den Erfassungsbereich der benachbarten Mischerschnecke fördern. Aufgrund der bezüglich der kreiszylindrischen Behälter fehlenden Mantelabschnitte des Gesamtbehälters fehlen dieser bekannten Mischeinrichtung jedoch die Voraussetzungen für eine Unterdruckbeaufschlagung zur Befüllung des Gesamtbehälters mit dem Mischgut.

Ähnliche Nachteile ergeben sich bei einer weiteren bekannten Mischvorrichtung (US 4 432 499 A), bei der sich ein auf einem Fahrzeug vorgesehener, stehender, im Querschnitt rechteckiger Behälter gegen zwei bodenseitige, in Fahrzeuglängsrichtung erstreckende, mit Förderschnecken versehene, trogartige Rinnen verjüngt, über die das Mischgut ein- und ausgetragen werden kann. Die Mischung selbst erfolgt über zwei in Fahrzeuglängsrichtung hintereinander angeordnete Mischerschnecken, die am oberen Ende mit Wurfflügeln bestückt sind, so daß das von der einen Mischerschnecke erfaßte und durch ein Fördergehäuse nach oben geförderte Mischgut in den Bereich der anderen, übereinstimmend ausgebildeten Mischerschnecke abgeworfen werden kann. Wegen der ebenen Umfangswände und der vorgesehenen Kreislaufführung des Mischgutes über eine der Förderschnecken ist diese bekannte Mischeinrichtung für eine Unterdruckbeaufschlagung ungeeignet.

Der Erfindung liegt somit die Aufgabe zugrunde, ein Fahrzeug mit einem Mischbehälter der eingangs geschilderten Art so auszugestalten, daß trotz der durch die maximal zulässigen Fahrzeugabmessungen gegebenen Raumbeschränkung die Mischgutmenge erheblich vergrößert werden kann, ohne auf einen Guteintrag zufolge einer Unterdruckbeaufschlagung verzichten zu müssen, und zwar bei vergleichsweise einfachen Konstruktionsvoraussetzungen.

Die Erfindung löst die gestellte Aufgabe dadurch, daß ein liegender Mischbehälter mit wenigstens zwei in Fahrzeuglängsrichtung hintereinander angeordneten Austragstrichtern vorgesehen ist, die je eine durch ein Fördergehäuse geführte Mischerschnecke aufnehmen, und daß sich die Abwurfbereiche der Wurfflügel der Mischerschnecken überschneiden.

Da ein liegender Mischbehälter, also ein Mischbehälter mit einer im wesentlichen horizontalen Achse, zum Einsatz kommt, kann der für einen Aufbau des Fahrzeuges nutzbare Freiraum vorteilhaft für ein entsprechend großes Aufnahmevolumen des Mischbehälters genützt werden, zumal im Vergleich zu einem Mischbehälter in einer Grundrißform zweier einander überschneidender Kreiszylinder die freien Zwickelbereiche zwischen den Kreiszylinderabschnitten entfallen. Der liegende Mischbehälter stellt darüber hinaus eine wesentliche Voraussetzung für eine ausreichende Druckfestigkeit zur Beaufschlagung mit einem Unterdruck dar, weil sich ein im wesentlichen geschlossener Querschnitt ergibt, dessen Gewölbewirkung zur Aufnahme der radial von außen einwirkenden Druckbelastungen vorteilhaft genützt werden kann. Die beiden an diesem liegenden Mischbehälter angesetzten Austragstrichter beeinträchtigen die Stützwirkung wegen ihrer kegelförmigen Form kaum. Da im Bereich der Austragstrichter in an sich bekannter Weise Mischerschnecken vorgesehen sind, die Quer zur Achse des Mischbehälters vorlaufen, kann ein gutes Mischergebnisses erreicht werden, wenn sich die Abwurfbereiche der Wurfflügel der in Fahrzeuglängsrichtung hintereinander angeordneten Mischerschnecken entsprechend überschneiden, so daß stets Mischgut aus dem Förderbereich der einen Mischerschnecke in den Einzugsbereich der anderen Förderschnecke und umgekehrt abgeworfen wird. Die den Mischerschnecken zugeordneten Austragstrichter stellen dabei sicher, daß das Mischgut über den gesamten Querschnittsbereich des liegenden Mischbehälters in den Einzugsbereich der Mischerschnecken nachrieselt.

Der Austrag des gemischten Gutes kann vorteilhaft pneumatisch durchgeführt werden. Um im Zusammenhang mit einer pneumatischen Förderung vorteilhafte Konstruktionsverhältnisse zu schaffen, können die Austragstrichter je zwei Austragsstutzen zum Anschluß an zwei gemeinsame, je für sich pneumatisch beaufschlagbare Förderleitungen aufweisen, so daß das Mischgut je nach Schaltung der Förderleitungen nur aus einem oder aus beiden Austragstrichtern entnommen werden kann.

In der Zeichnung ist der Erfindungsgegenstand beispielsweise dargestellt. Es zeigen
- Fig. 1: einen Aufbau für ein erfindungsgemäßes Fahrzeug in einem Blockschaltbild,
- Fig. 2: den Mischbehälter ausschnittsweise im Bereich der an die Förderleitungen angeschlossenen Austragstrichter in einer vereinfachten Seitenansicht in einem größeren Maßstab und
- Fig. 3: einen Schnitt nach der Linie III-III der Fig. 2 in einem größeren Maßstab.

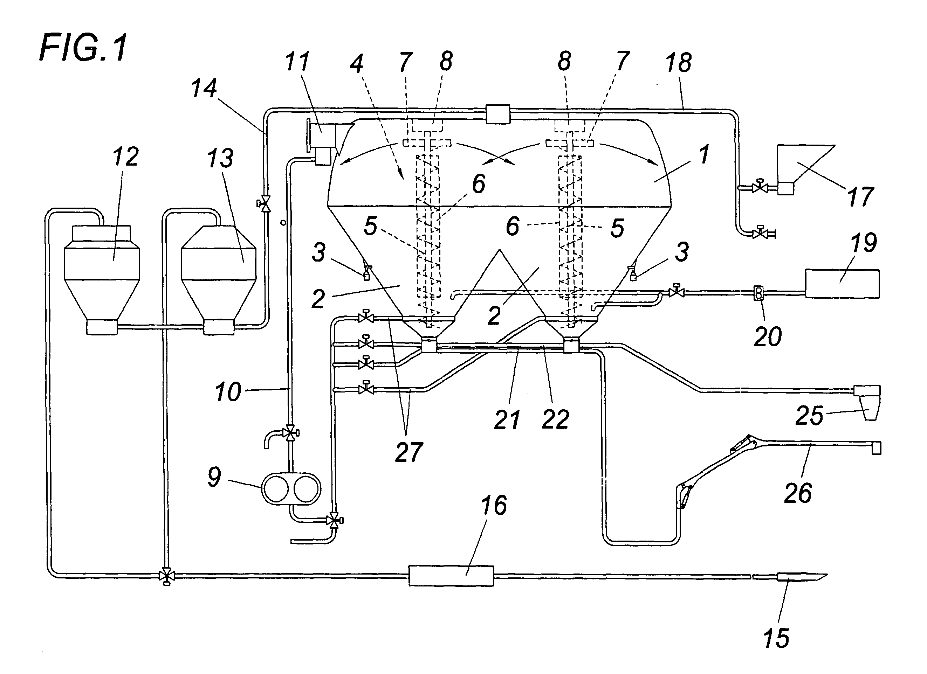

In der Fig. 1 ist der Aufbau eines erfindungsgemäßen Fahrzeuges schematisch in Form eines Blockschaltbildes dargestellt. Es ist ein liegender Mischbehälter 1 zu erkennen, der mit zwei in Fahrzeuglängsrichtung hintereinander angeordneten Austragstrichtern 2 versehen ist. Der Mischbehälter 1 ist gegenüber dem Fahrgestell des Fahrzeuges über Wiegezellen 3 abgestützt, mit deren Hilfe die Befüllung mit Mischgut gesteuert werden kann. Innerhalb des Mischbehälters 1 ist eine Mischeinrichtung 4 mit zwei Mischerschnecken 5 vorgesehen, die von den Austragstrichtern 2 aufragen und ein Fördergehäuse 6 durchsetzen. Die Förderschnecken 5 die im Bereich ihres Abwurfendes mit Wurfflügeln 7 versehen sind, werden durch Antriebe 8 im Deckenbereich des Mischbehälters 1 angetrieben. Aufgrund der liegenden Anordnung des Mischbehälters, an dessen Mantel lediglich die Austragstrichter 2 angesetzt sind, kann der Mischbehälter 1 ohne besonderen Konstruktionsaufwand als Druckbehälter ausgeführt werden, um diesen Mischbehälter 1 mittels einer Unterdruckbeaufschlagung befüllen zu können.

Zum Beladen des Mischbehälters 1 dient in bewährter Weise ein Drehkolbengebläse 9, dessen Saugleitung 10 über eine Filtereinrichtung 11 an den Mischbehälter 1 angeschlossen ist und den Mischbehälter 1 mit Unterdruck beaufschlagt, so daß der Mischbehälter 1 über eine einerseits an eine Quetscheinrichtung 12 und anderseits an eine Mühle 13 angeschlossene Förderleitung 14 mit Mischgut befüllt werden kann, das beispielsweise mit Hilfe einer Sauglanze 15 aus einem Vorratsbehälter abgesaugt und über einen Magnetabscheider 16 der Quetscheinrichtung 12 bzw. der Mühle 13 zugeführt wird. Die Zusatzstoffe für das Mischgut können über eine Gosse 17 aufgegeben werden, die über eine Zuleitung 18 mit dem Mischbehälter 1 in Verbindung steht. Zusätzlich kann das Mischgut mit Flüssigkeit versetzt werden, beispielsweise mit Öl, das aus einem Tank 19 mittels einer Pumpe 20 in den Bereich der Austragstrichter 2 gepumpt wird.

Das in den Mischbehälter 1 geförderte Mischgut wird mit Hilfe der Mischerschnecken 5 in zwei einander überschneidenden Gutkreisläufen gemischt, weil sich die Abwurfbereiche der den beiden Mischerschnecken 5 zugehörigen Wurfflügel 7 überschneiden, wie dies durch die in der Fig. 1 angedeuteten Abwurfbahnen angedeutet ist. Aufgrund der Überschneidung dieser Abwurfbahnen gelangt Mischgut aus dem Einzugsbereich der beiden Mischerschnecken 5 in den Einzugsbereich der jeweils anderen Mischerschnecke, wodurch ein einheitliches Mischergebnis für das gesamte Mischgut sichergestellt werden kann.

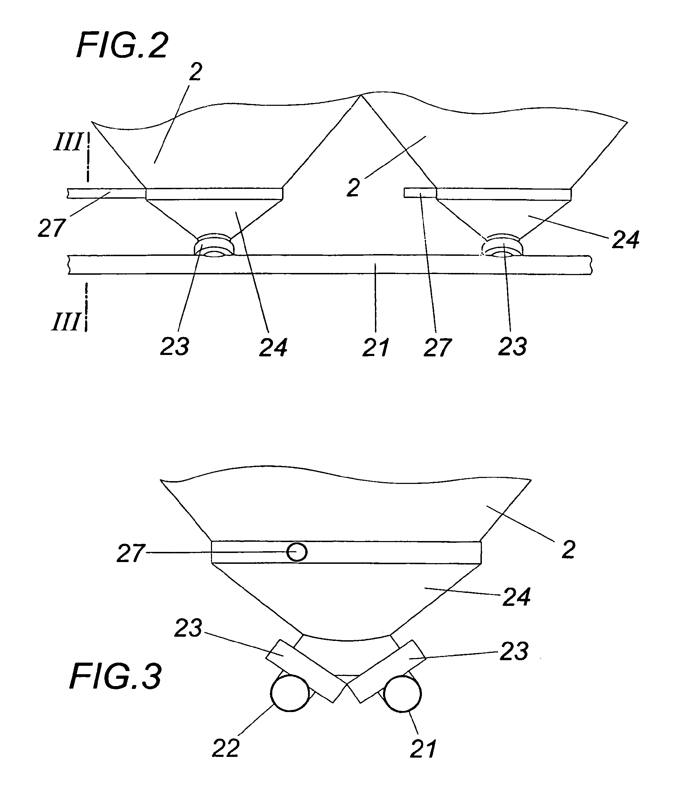

Nach dem Mischvorgang kann das gemischte Gut über die Austragstrichter 2 ausgetragen werden, vorzugsweise mit Hilfe von pneumatisch beaufschlagbaren Förderleitungen 21, 22. Diese Förderleitungen 21, 22 sind an die Druckseite des Drehkolbengebläses 9 angeschlossen und stehen gemäß den Fig. 2 und 3 über Anschlußstutzen 23 jeweils mit einer Austragskammer 24 der Austragstrichter 2 in Verbindung, so daß je nach dem Schaltzustand Mischgut wahlweise über die Förderleitungen 21 und 22 aus den Austragstrichtern 2 ausgefördert werden kann. Die Förderleitung 22 führt dabei gemäß dem Ausführungsbeispiel nach der Fig. 1 zu einem Zyklonabscheider 25, während die Förderleitung 21 mit einem schwenkverstellbaren Arm 26 verbunden ist, über den das Mischgut ebenfalls ausgefördert werden kann. Zur Vermeidung einer das Nachrieseln des Mischgutes beeinträchtigenden Brükkenbildung im Bereich der Austragstrichter 2 sind an die Druckseite des Drehkolbengebläses 9 angeschlossene Blasleitungen 27 vorgesehen, die oberhalb der Austragskammern 24 in die Austragstrichter 2 münden und für eine entsprechende Auflockerung des Mischgutes sorgen.

## Patentansprüche

1. Fahrzeug mit einem Mischbehälter (1), der zum Ansaugen von zu mischendem, rieselfähigem Mischgut über eine Zubringereinrichtung mit Hilfe einer an den Mischbehälter (1) angeschlossenen Saugleitung (10) mit Unterdruck beaufschlagbar ist, und mit einer innerhalb des Mischbehälters (1) vorgesehenen Mischeinrichtung (4), die eine von einem Austragstrichter (2) des Mischbehälters (1) ausgehende, durch ein stehendes Fördergehäuse (6) geführte Mischerschnecke (5) umfaßt, die im Bereich ihres Abwurfendes Wurfflügel (7) trägt, **dadurch gekennzeichnet, daß** ein liegender Mischbehälter (1) mit wenigstens zwei in Fahrzeuglängsrichtung hintereinander angeordneten Austragstrichtern (2) vorgesehen ist, die je eine durch ein Fördergehäuse (6) geführte Mischerschnecke (5) aufnehmen, und daß sich die Abwurfbereiche der Wurfflügel (7) der Mischerschnecken (5) überschneiden.

2. Fahrzeug nach Anspruch 1, **dadurch gekennzeichnet, daß** die Austragstrichter (2) je zwei Austragsstutzen (23) zum Anschluß an zwei gemeinsame, je für sich pneumatisch beaufschlagbare Förderleitungen (21, 22) aufweisen.

## Claims

1. Vehicle with a mixing container (1) which can be impacted with underpressure for the inward suction of bulk material to be mixed by means of a feeding device with the aid of a suction line (10) connected to the mixing container (1), and with a mixing device (4) provided within the mixing container (1) which comprises a mixer screw (5) coming from a discharge funnel (2) of the mixing container (1) and guided through a vertical conveyor housing (6) which carries ejector vanes (7) in the region of its ejection end (1), **characterised in that** a horizontal mixing container (1) is provided with at least two discharge funnels (2) arranged one behind the other in the vehicle longitudinal direction which each receive a mixer screw (5) guided through a conveyor housing (6) and **in that** the ejection regions of the ejector vanes (7) of the mixer screws (5) overlap.

2. Vehicle according to claim 1, **characterised in that** the discharge funnels (2) each comprise two discharge nozzles (23) for connection to two shared conveying lines (21, 22) which can each be individually pneumatically impacted.

## Revendications

1. Véhicule équipé d'un récipient de mélange (1), susceptible d'être sollicité par un vide pour aspirer un produit à mélanger fluide, devant être mélangé, par un dispositif d'alimentation, à l'aide d'une conduite d'aspiration (10) raccordée au récipient de mélange (1), et avec un dispositif de mélange (4), prévu à l'intérieur du récipient de mélange (1), comprenant une vis de mélangeur (5) sortant d'une trémie de distribution (2) du récipient de mélange (1) et guidée à travers un carter de transfert (6) stationnaire, vis de mélangeur (5) portant des ailettes d'éjection (7) dans la zone de son extrémité d'éjection, **caractérisé en ce qu'**un récipient de mélange (1) horizontal est prévu, comprenant au moins deux trémies de distribution (2), disposées l'une derrière l'autre dans la direction longitudinale du véhicule, recevant chacune une vis de mélangeur (5) guidée à travers un carter de transfert (6), et **en ce que** les zones d'éjection des ailettes d'éjection (7) des vis de mélangeur (5) se recoupent.

2. Véhicule selon la revendication 1, **caractérisé en ce que** les trémies de distribution (2) présentent chacune deux tubulures de distribution (23) pour raccordement à deux conduites de transfert (21, 22) communes, pouvant être sollicitées pneumatiquement individuellement.
